# EUROPÄISCHE PATENTSCHRIFT

(11) **EP 2 625 128 B1**
(45) Veröffentlichungstag und Bekanntmachung des Hinweises auf die Patenterteilung: **25.02.2015**
(21) Anmeldenummer: 11764772.7
(22) Anmeldetag: 07.10.2011
(51) Int. Cl.: B65H 54/28, F16G 1/28

(54) **AUFSPULMASCHINE UND ZAHNRIEMEN**
WINDING MACHINE AND TOOTHED BELT
ENROULEUSE ET COURROIE DENTÉE

(30) Priorität: 09.10.2010 DE 102010048016
(43) Veröffentlichungstag der Anmeldung: 14.08.2013
(73) Patentinhaber: Oerlikon Textile GmbH & Co. KG, 42897 Remscheid (DE)
(72) Erfinder: MAYER, Klaus, 42855 Remscheid (DE); SCHRÖTER, Michael, 42899 Remscheid (DE); KOWALSKI, Jürgen, 59071 Hamm (DE); WITKOWSKI, Dirk, 51688 Wipperfürth (DE)
(74) Vertreter: Neumann, Ditmar
(86) Internationale Anmeldenummer: PCT/EP2011/067539
(87) Internationale Veröffentlichungsnummer: WO 2012/045855

(56) Entgegenhaltungen:
- EP-A2- 0 965 554
- Contitech Ag: "Product Range SYNCHROFLEX Timing Belts - Power Transmission Group", , 20. Mai 2009 (2009-05-20), XP55014456, Gefunden im Internet: URL:http://www.contitech.de/pages/produkte /antriebsriemen/antrieb-industrie/download /TD_Synchroflex_en.pdf [gefunden am 2011-12-09]
- THD: "Zahnriemen", , 19. März 2010 (2010-03-19), XP002665468, Gefunden im Internet: URL:http://www.technischer-handel-denniger .de/zahnriemen.htm [gefunden am 2011-12-09]

## Beschreibung

Die Erfindung betrifft eine Aufspulmaschine zum Aufwickeln mehrerer Fäden zu Spulen gemäß dem Oberbegriff des Anspruchs 1 sowie ein Zahnriemen zur Verwendung in einer derartigen Aufspulmaschine gemäß dem Oberbegriff des Anspruchs 8.

Eine gattungsgemäße Aufspulmaschine ist aus der EP 0 965 554 A2 bekannt.

Derartige Aufspulmaschinen werden bei der Herstellung von synthetischen Fäden zum Aufwickeln der Fäden zu Spulen eingesetzt. Hierbei werden je nach Prozess und Fadentyp hohe Fadenlaufgeschwindigkeiten erzeugt, die im Bereich oberhalb von 6.000 m/min. liegen können. Da in dem Schmelzspinnprozess die Fäden innerhalb einer Spinnposition als eine Fadengruppe extrudiert, behandelt und geführt werden, werden die Fäden ebenfalls gemeinsam parallel zu Spulen gewickelt. Hierzu weist die bekannte Aufspulmaschine eine auskragende Spulspindel auf, an der mehrere verteilt angeordnete Wickelstelle ausgebildet sind. Um die Fäden in einer Kreuzwicklung zu Spulen wickeln zu können, ist eine Changiervorrichtung vorgesehen, die pro Wickelstelle jeweils eine Flügelchangiereinheit aufweist. Derartige Flügelchangiereinheiten sind insbesondere geeignet, um bei hohen Geschwindigkeiten eine Hin- und Herführung des jeweiligen Fadens in der Wickelstelle ausführen zu können. Die Flügelchangiereinheiten weisen hierzu zwei gegensinnig rotierende Flügelpaare auf, bei welchem die Flügelpaare abwechselnd den Faden hin- und herführen. Die Flügelchangiereinheiten werden synchron angetrieben, wobei das Drehmoment eines Elektromotors über einen Riementrieb auf jede der Flügelchangiereinheiten übertragen wird.

Um in jeder der Wickelstellen einen gleichmäßigen Spulenaufbau beim Aufwickeln der Fäden zu erzeugen, erfolgt die Drehübertragung schlupffrei mit einem Zahnriemen. Derartige Zahnriemen besitzen jedoch den Nachteil, dass die Riemenzähne durch den ständig wechselnden Zahneingriff zu einer Schwingungsanregung führen. Dieser auch als Polygoneffekt bekannte Nachteil ist im Wesentlichen von der Zahnteilung und dem Zahneingriff abhängig.

Bei der Changierung und Aufwicklung der Fäden zu Spulen ist es desweiteren zu berücksichtigen, dass zur Vermeidung von Bildwicklungen, die den Spulenaufbau empfindlich stören, schnelle Frequenzänderungen innerhalb der Changierung erforderlich sind. Es hat sich nun gezeigt, dass in bestimmten Frequenzbereichen der Changierung ungewünschte Überlagerungen und Resonanzen zwischen Changierfrequenz und Erregerfrequenz aus dem Polygoneffekt des Zahnriemens entstehen. Derartige Resonanzen führen zu Lastspitzen, die eine erhebliche Belastung in den Riemenzähnen darstellen. Andererseits können diese Effekte sich auch ungünstig auf die Wicklung der Spulen auswirken.

Es ist nunmehr Aufgabe der Erfindung, eine Aufspulmaschine der gattungsgemäßen Art zu schaffen, bei welcher derartig ungünstige Betriebszustände und somit ein vorzeitiger Riemenverschleiß verhindert wird.

Diese Aufgabe wird erfindungsgemäß dadurch gelöst, dass der Riementrieb einen endlosen Zahnriemen mit einer Vielzahl von Riemenzähnen mit einem Teilungsabstand im Bereich von >4 mm bis <5 mm aufweist.

Vorteilhafte Weiterbildungen der Erfindung sind durch die Merkmale und Merkmalskombinationen der jeweiligen Unteransprüche definiert.

Die Erfindung beruht auf der Erkenntnis, dass insbesondere ganzzeilige Teilungsabstände zwischen den Riemenzähnen Resonanzerscheinungen mit der Changierfrequenz begünstigten. Insoweit hat sich überraschenderweise herausgestellt, dass ein Teilungsabstand zwischen den Riemenzähnen in dem Bereich zwischen 4 mm und 5 mm sich besonders günstig auf den Antrieb der Flügelchangiereinheiten und sowie der Fadenverlegung zur Bildung der Spulen auswirkt.

Die Weiterbildung der Erfindung, bei welcher der Teilungsabstand zwischen zwei benachbarten Riemenzähnen 4,82 mm groß ist, hat sich besonders bei hohen Aufspulgeschwindigkeiten im Bereich von 3.000 m/min. bis 6.000 m/min. als besonders vorteilhaft herausgestellt.

Um bei den hohen dynamischen Belastungen, die insbesondere bei den schnell ändernden Changierfrequenzen aufgrund von Vermeidung von Bildwicklungen entstehen, sicher und schlupffrei auch bei relativ kleinen Zahnscheibendurchmessern übertragen zu können, ist die Weiterbildung der Erfindung bevorzugt verwendet, bei welcher die Riemenzähne jeweils eine Parabelform mit vollständig ausgefüllten Zahnköpfen aufweisen. Damit können hohe dynamische Belastungen vom Zahnriemen während des Eingriffs in einer Zahnscheibe ertragen werden.

Der Eingriff mit einer Zahnscheibe, die mit einem kreisförmigen Zahnprofil der Scheibenzähne ausgebildet ist, erhöht dabei die Gleichmäßigkeit des Eingriffs und führt insbesondere zur Vergleichmäßigung des Zahnflankenverschleißes an den Riemenscheiben des Zahnriemens.

Neben der Verschleißfestigkeit lässt sich zudem die Geräuschentwicklung positiv durch die Weiterbildung der Erfindung beeinflussen, bei welcher zumindest eine Flachseite des Zahnriemens eine dämpfende Textillage trägt, wobei der Grundwerkstoff des Zahnriemens aus einem Polyurethan gebildet ist und wobei in dem Grundwerkstoff mehrere Stahllitzen eingebettet sind. Derartige Hochleistungswerkstoffe haben sich besonders bewährt, um eine Mehrzahl von Flügelchangiereinheiten in der Aufspulmaschine sicher anzutreiben. So lassen sich in der Aufspulmaschine zehn, zwölf oder noch mehr Flügelchangiereinheiten der Changiereinrichtung über einen Riementrieb sicher antreiben. Wesentlich hierbei ist, dass in jeder der Wickelstellen die Changierfrequenzen entsprechend der Wickelprogramme gleich sind.

Um bei einer derartig großen Vielzahl von Flügelchangiereinheiten auch mit relativ kleinen Abmessungen hohe Leistungen zu übertragen, wird der Zahnriemen bevorzugt mit beidseitig ausgebildeten Riemenzähnen eingesetzt. Hierbei lässt sich der wechselseitige Kräfteangriff an dem Zahnriemen besonders durch einen Versatz zwischen den gegenüberliegenden Riemenzähnen an dem Zahnriemen aufnehmen. Dies führt zu einer besonders hohen Laufruhe des gesamten Riementriebes.

Die Riemenzähne an den beiden Flachseiten des Zahnriemens werden dabei bevorzugt mit gleichgroßen Teilungsabständen angeordnet, wobei der Versatz zwischen den gegenüberliegenden Riemenzähnen gleich dem halben Teilungsabstand ist. Damit ist eine geometrische Gleichmäßigkeit sowohl beim Eingriff als auch bei der Ausbildung des Zahnriemens gewährleistet.

Die erfindungsgemäße Aufspulmaschine ermöglicht somit einen Gruppenantrieb für alle Flügelchangiereinheiten, wobei selbst bei einer Mehrzahl von Wickelstellen in jeder der Wickelstellen ein identischer Spulenaufbau beim Wickeln der Fäden realisierbar ist. Selbst Spiegelstörverfahren zur Vermeidung von Bildwicklungen in den Wickelstellen lassen sich über den Gruppenantrieb insbesondere durch Verwendung des Zahnriemens mit dem erfindungsgemäßen Teilungsabstand an jeder der Flügelchangiereinheiten mit identischen Changierfrequenzen und schnellen Frequenzänderungen umsetzen.

Der Zahnriemen zur Verwendung in einer Aufspulmaschine, bei welchem der Teilungsabstand zwischen benachbarten Riemenzähnen einer der Flachseiten einen Wert zwischen 4 mm und 5 mm vorzugsweise einen Wert von 4,82 mm hat, ist daher besonders vorteilhaft, um eine Mehrzahl von Flügelchangiereinheiten zur Verlegung mehrerer Fäden in mehreren Wickelstellen gleichmäßig anzutreiben, wobei in jeder der Wickelstellen die Spulen eine im wesentlichen identischen Spulenaufbau aufweisen. Aufgrund der Vielzahl der Wickelstellen in derartigen Aufspulmaschinen sind an beiden Flachseiten des Zahnriemens eine Vielzahl von Riemenzähnen ausgebildet, wobei vorteilhaft der Teilungsabstand der Riemenzähne an beiden Flachseiten identisch ausgebildet ist.

Der gegenüberliegende Krafteingriff lässt sich dabei besonders günstig ausbilden, in dem die sich an den Flachseiten gegenüberliegenden Riemenzähne versetzt zueinander an dem Zahnriemen ausgebildet sind und dass der Versatz gleich dem halben Teilungsabstand ist.

Um insbesondere die in einer Aufspulmaschine vorherrschende Umgebung, die im wesentlichen durch die vom Faden abgeschleuderten flüchtigen Bestandteile wie beispielsweise Präparationsreste konterminiert ist, zu ertragen, ist der Zahnriemen bevorzugt aus einem thermoplastischen Basismaterial beispielsweise einem Polyurethan gebildet, welcher vorzugsweise mehrere Stahllitzen zur Übertragung der Zugkräfte aufweist. Zur Reduzierung der relativ hohen Reibwerte sind vorzugsweise an beiden Flachseiten die Riemenzähne mit einer Textillage in Form eines Gewebes überdeckt.

Nachfolgend ist ein Ausführungsbeispiel der erfindungsgemäßen Aufspulmaschine zur weiteren Erläuterung der Erfindung näher beschrieben. Hierzu sind folgende Figuren der Beschreibung beigefügt.
- Fig. 1: schematisch eine Vorderansicht eines Ausführungsbeispiels der erfindungsgemäßen Aufspulmaschine
- Fig. 2: schematisch eine Draufsicht des Ausführungsbeispiels aus Fig. 1
- Fig. 3: schematisch eine Teilansicht des Zahnriemens des Ausführungsbeispiels nach Fig. 1 und 2
- Fig. 4: schematisch eine Querschnittansicht des Zahnriemens aus Fig. 3

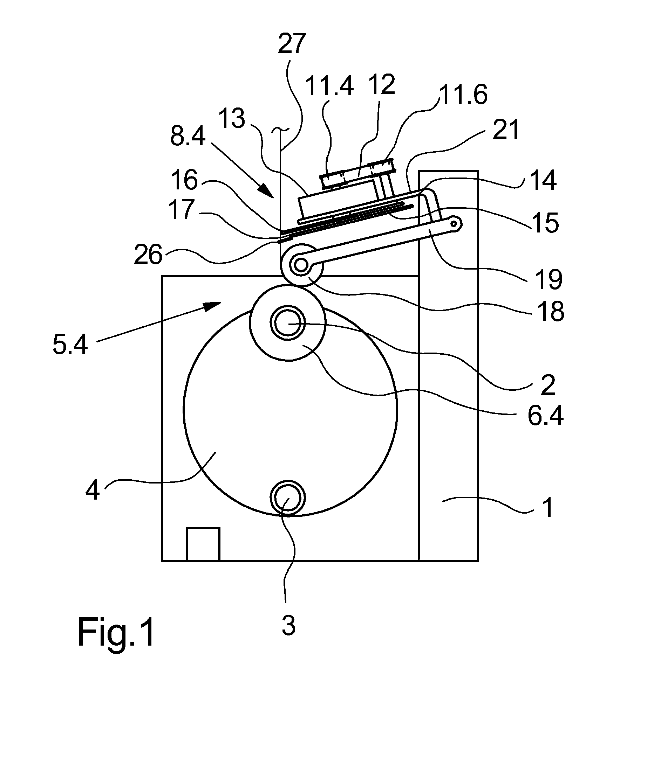

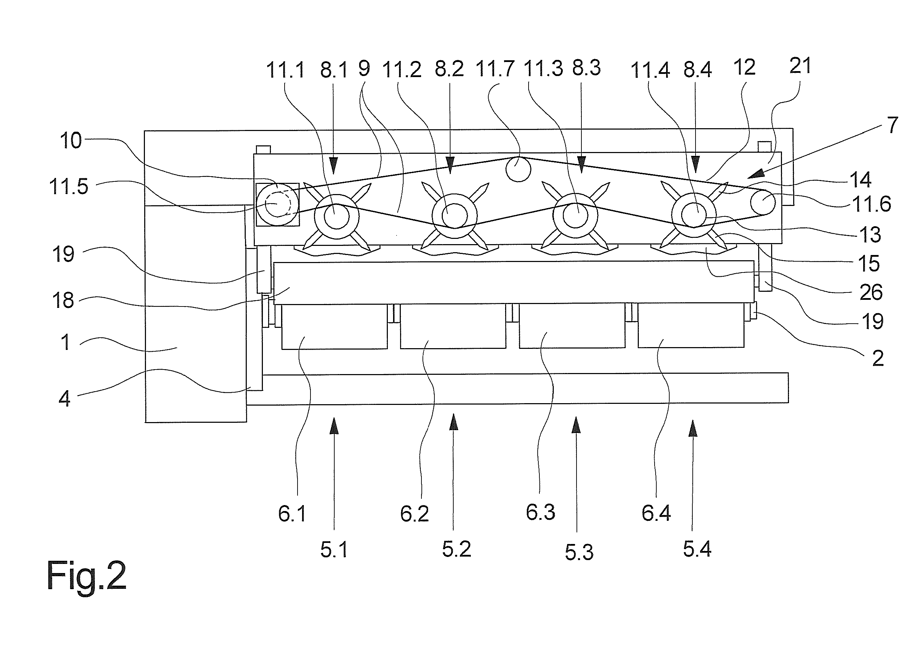

In den Fig. 1 und 2 ist ein Ausführungsbeispiel der erfindungsgemäßen Aufspulmaschine in verschiedenen Ansichten dargestellt. Fig. 1 zeigt schematisch eine Vorderansicht und Fig. 2 schematisch eine Draufsicht des Ausführungsbeispiels. Insoweit kein ausdrücklicher Bezug zu einer der Figuren gemacht ist, gilt die nachfolgende Beschreibung für beide Figuren.

Das dargestellte Ausführungsbeispiel der erfindungsgemäßen Aufspulmaschine wird üblicherweise in einem Herstellungsprozess für synthetische Fäden in einer Schmelzspinnanlage zum Aufwickeln einer Gruppe von Fäden eingesetzt, die als eine Fadenschar extrudiert, verstreckt, behandelt und der Aufspulmaschine zugeführt werden. In der Aufspulmaschine ist für jeden der Fäden eine von mehreren Wickelstellen ausgebildet.

Wie aus der Darstellung in Fig. 2 hervorgeht, weist das Ausführungsbeispiel insgesamt vier Wickelstellen 5.1, 5.2, 5.3 und 5.4 auf, um in jeder der Wickelstellen 5.1 bis 5.4 einen Faden zu jeweils einer Spule 6.1 bis 6.4 zu wickeln. Die Spulen 6.1 bis 6.4 sind hierzu nebeneinander an einer auskragenden Spulspindel 2 gehalten. Die Spulspindel 2 ist derart angetrieben, dass die Fäden mit im Wesentlichen gleichbleibender Wickelgeschwindigkeit an den Spulen 6.1 bis 6.4 gewickelt werden.

Um in jeder der Wickelstellen 5.1 bis 5.4 in den Faden an den Spulen 6.1 bis 6.4 zu wickeln, ist der Spulspindel 2 eine Changiervorrichtung 7 vorgeordnet. Die Changiervorrichtung 7 weist zu jeder der Wickelstelle 5.1 bis 5.4 jeweils eine Flügelchangiereinheit 8.1 bis 8.4 auf. Die Flügelchangiereinheiten 8.1 bis 8.4 werden als eine Gruppe durch einen Elektromotor 10 angetrieben. Zur Drehübertragung ist der Elektromotor 10 über einen Riementrieb 9 mit den Flügelchangiereinheiten 8.1 bis 8.4 gekoppelt. Der Riementrieb 9 weist hierzu pro Flügelchangiereinheit 8.1 bis 8.4 jeweils eine Zahnscheibe 11.1 bis 11.4 auf, die über einen Zahnriemen 12 des Riementriebes 9 mit dem Elektromotor 10 verbunden sind. Dem Elektromotor 10 ist hierzu ebenfalls eine Zahnscheibe 11.5 zugeordnet. Darüber hinaus sind zur Rückführung des Zahnriemens 12 zwei weitere Zahnscheiben 11.6 und 11.7 vorgesehen.

Wie aus der Darstellung in Fig. 1 hervorgeht, weist jede der Flügelchangiereinheiten 8.1 bis 8.4 ein Rotorgetriebe 13 auf, das direkt mit einer der Zahnscheiben 11.1 bis 11.4 gekoppelt ist. In Fig. 1 ist die Wickelstelle 5.4 mit der Flügelchangiereinheit 8.4 schematisch gezeigt. Jede der Flügelchangiereinheiten 8.1 bis 8.4 sowie jede der nachfolgenden Wickelstellen 5.1 bis 5.4 sind identisch aufgebaut, so dass anhand der Darstellung in Fig. 1 beispielhaft die Wickelstelle 5.4 mit der Flügelchangiereinheit 8.4 erläutert wird. Durch das Rotorgetriebe 13 wird ein erster Rotor 16 mit einem ersten Flügelsatz 14 und ein zweiter Rotor 17 mit einem zweiten Flügelsatz 15 gegensinnig angetrieben. Dem ersten Flügelsatz 14 und dem zweiten Flügelsatz 15 ist ein Leitlineal 26 zugeordnet, an welcher Führungskante ein Faden 27 durch die beiden Flügelsätze 14 und 15 hinund herführbar ist.

Die Flügelchangiereinheit 8.4 ist an einem Changierträger 21 angeordnet, welcher sich über die gesamt Changiervorrichtung 7 erstreckt und den Riementrieb 9 sowie die übrigen Flügelchangiereinheiten 8.1 bis 8.3 trägt. Der Changierträger 21 stützt sich in diesem Ausführungsbeispiel an Schwenkarmen 19 ab, die schwenkbar in einem Maschinengestell 1 gehalten sind und an ihren freien Enden eine Andrückwalze 18 tragen. Die Andrückwalze 18 ist drehbar in den Schwenkarm 19 gelagert und liegt während des Aufwickelvorgangs an den Oberflächen der Spulen 6.1 bis 6.4 an.

Wie aus der Darstellung in Fig. 1 hervorgeht, ist in dem Maschinengestell 1 ein Spindelträger 4 als ein Spulrevolver ausgebildet, an welchem eine zweite Spulspindel 3 auskragend gehalten ist. Jede der Spulspindeln 2 und 3 ist unabhängig voneinander antreibbar, wobei dem Spindelträger 4 ebenfalls ein Antrieb zugeordnet ist. Die Antriebe sind in diesem Ausführungsbeispiel nicht dargestellt. Zum Aufwickeln der Fäden an den Spulen 6.1 bis 6.4 wird die Spulspindel 2 durch Bewegung des Spindelträgers 4 geführt. Nach Beendigung des Spulvorgangs und Fertigstellung der Spulen 6.1 bis 6.4 wird die Spulspindel 2 aus dem Wickelbereich in einen Wechselbereich und die Spulspindel 3 aus dem Wechselbereich in den Wickelbereich geführt. Insoweit ist ein kontinuierliches Aufwickeln der Fäden möglich.

Beim Aufwickeln der Fäden zu den Spulen 6.1 bis 6.4 werden diese mit vorgegebener Changierfrequenz durch die Flügelchangiereinheiten 8.1 bis 8.4 hin- und hergeführt. Hierbei tritt grundsätzlich das Problem der sogenannten Bildwicklungen auf. Eine Bildwicklung entsteht bei wachsendem Spulendurchmesser immer dann, wenn pro Doppelhub der Flügelchangiereinheit eine oder mehrere vollständige Spulenumdrehungen stattfinden, d.h. wenn das Verhältnis aus Drehzahl der Spule zu Doppelhubfrequenz der Flügelchangiereinheit = 1, ein ganzzeiliges Vielfaches oder ein ganzzeiliger Bruch ist. Als Doppelhub wird dabei eine vollständige Hin- und Herbewegung des Fadens bezeichnet. Das Verhältnis aus Drehzahl der Spule zu Doppelhubfrequenz der Flügelchangiereinheit wird im Allgemeinen als Kreuzungsverhältnis bezeichnet. Solche Bildwicklungen werden vermieden, da sie beim Abwickeln der Spule zu bestimmten Störungen sowie anhand des Aufwickelns zu Schwingungen führen können. Insoweit werden Wickelprogramme vorgegeben, die das Erzeugen von Bildwicklungen vermeiden. Insbesondere werden hierbei die Changierfrequenzen der Flügelchangiereinheiten 8.1 bis 8.4 gesteuert, um kritische Kreuzungsverhältnisse zu vermeiden. Derartige Changierfrequenzänderungen werden über den Elektromotor 10 und den Riementrieb 9 eingeleitet, so dass in jeder der Wickelstellen 5.1 bis 5.4 eine entsprechende Korrektur der Changierfrequenz erfolgt. Da alle Spulen 6.1 bis 6.4 über die Spulspindel 2 angetrieben sind, ist es erforderlich, dass die Changierfrequenzen in jeder der Wickelstellen 5.1 bis 5.4 zum gleichen Zeitpunkt und mit identischer Größe über die Flügelchangiereinheiten 8.1 bis 8.4 eingeleitet wird. Um diese möglichst störungsfrei und ohne zusätzlich über den Riementrieb 9 erzeugte Resonanzen einleiten zu können, ist der Teilungsabstand des Zahnriemens 12 insbesondere auf derartige Wickelverfahren abgestimmt.

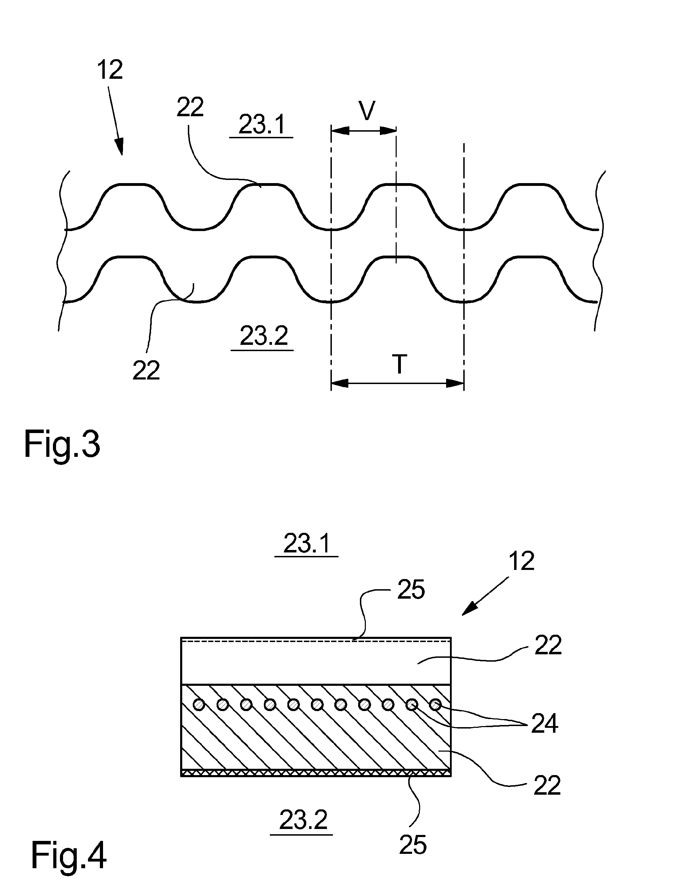

Die Ausbildung des Zahnriemens 12 des Riementriebs 9 lässt sich insbesondere aus der Fig. 3 und Fig. 4 erläutern.

In Fig. 3 ist eine Teilansicht des Zahnriemens 12 und in Fig. 4 eine Querschnittansicht des Zahnriemens 12 dargestellt. Insoweit kein ausdrücklicher Bezug zu einer der Figuren gegeben ist, gilt die nachfolgende Beschreibung für beide Figuren.

Der Zahnriemen 12 weist in zwei gegenüberliegenden Flachseiten 23.1 und 23.2 eine Vielzahl von Riemenzähnen 22 auf. Der Zahnriemen 12 ist als endloser Riemen ausgebildet. Die an den Flachseiten 23.1 und 23.2 angeformten Riemenzähne 22 weisen jeweils eine Parabelform mit vollständig ausgefüllten Zahnköpfen auf. Die Parabelform der Riemenzähne 22 ist im Wesentlichen identisch zu den bekannten Hochleistungsprofilen mit der Bezeichnung RPP. Der Teilungsabstand, der mit dem Kennbuchstaben T in Fig. 3 eingetragen ist, bezeichnet den Abstand zwischen zwei benachbarten Riemenzähnen 22 an einer der Flachseite 23.1 oder 23.2. Der Teilungsabstand T, der gemeinsam mit dem Zahnprofil den sogenannten Polygoneffekt beeinflusst, ist im Hinblick auf die Verwendung und Funktion des Zahnriemens 12 in der Changiervorrichtung 7 auf einen Wert im Bereich zwischen 4 mm und 5 mm eingestellt. Durch diesen Teilungsabstand T werden vorteilhaft störende Resonanzerscheinungen vermieden, die sich störend auf das Aufwickeln der Fäden und die veränderten Changierfrequenzen auswirken könnten. Bei dem in Fig. 3 dargestellten Ausführungsbeispiel des Zahnriemens 12 ist der Teilungsabstand T bevorzugt auf einen Wert von 4,82 mm eingestellt. Der Teilungsabstand T ist dabei an beiden Flachseiten 23.1 und 23.2 identisch groß ausgeführt.

Zwischen den sich gegenüberliegenden Riemenzähnen 22 an den Flachseiten 23.1 und 23.2 ist ein Versatz eingestellt, so dass die Riemenzähne 22 an der Flachseite 23.1 und die Riemenzähne 22 an der Flachseite 23.2 eine versetzte Anordnung zueinander aufweisen. Der Versatz ist mit dem Kennbuchstaben V in Fig. 3 eingetragen. Der Versatz V ist bei diesem Ausführungsbeispiel gleichgroß dem halben Teilungsabstand T. Somit gilt V = ½ T. Damit lässt sich der wechselseitige Kraftangriff, wie aus der Darstellung des Riementriebes 9 in Fig. 2 hervorgeht, verbessern. Insbesondere wird über den Versatz der Riemenzähne 22 die Laufruhe des Riementriebes 9 erheblich verbessert.

Der Aufbau des Zahnriemens 12 geht im Wesentlichen aus der Darstellung in Fig. 4 hervor. Der Zahnriemen 12 ist aus einem thermoplastischen Grundwerkstoff vorzugsweise einem Polyurethan gebildet. Innerhalb des Grundwerkstoffes sind mehrere Stahllitzen 24 nebeneinander eingebettet. An den äußeren Flachseiten 23.1 und 23.2 ist jeweils eine Textillage 25 vorgesehen, die die Oberflächen der Riemenzähne 22 abdeckt. Derartige Textillagen 25 wirken sich insbesondere vorteilhaft auf eine Geräuschminderung aus. Zudem lassen sich damit die hohen Reibwerte des Grundwerkstoffes reduzieren.

Der thermoplastische Grundwerkstoff hat sich bei der Verwendung in der Aufspulmaschine insbesondere gegenüber den in der Fadenumgebung herrschenden Bedingungen bewährt. So konnten vorzeitiger Verschleiß und Abrieb durch einen chemischen Angriff aufgrund von Präparationsresten vermieden werden.

Die in der Fig. 2 dargestellten Zahnscheiben 11.1 bis 11.7 werden in dem Riementrieb 9 bevorzugt mit einem kreisförmigen Zahnprofil ausgeführt. Derartige Profile, die beispielsweise auch unter dem Kennbuchstaben HTD als Hochleistungsprofile bekannt sind, wirken sich gemeinsam mit dem an dem Zahnriemen gewählten Parabelprofil günstig auf das Laufverhalten und den Zahnflankenverschleiss sowie dem Abrollverhalten der Zähne aus. Damit lassen sich die Flügelchangiereinheiten 8.1 bis 8.4 der Changiervorrichtung 7 sicher und schlupffrei antreiben.

### Bezugszeichenliste

- 1: Maschinengestell
- 2: Spulspindel
- 3: Spulspindel
- 4: Spindelträger
- 5.1, 5.2, 5.3, 5.4: Wickelstellen
- 6.1, 6.2, 6.3, 6.4: Spulen
- 7: Changiervorrichtung
- 8.1, 8.2, 8.3, 8.4: Flügelchangiereinheiten
- 9: Riementrieb
- 10: Elektromotor
- 11.1 - 11.7: Zahnscheiben
- 12: Zahnriemen
- 13: Rotorgetriebe
- 14: erster Flügelsatz
- 15: zweiter Flügelsatz
- 16: erster Rotor
- 17: zweiter Rotor
- 18: Andrückwalze
- 19: Schwenkarm
- 20: Spulhülse
- 21: Changierträger
- 22: Riemenzahn
- 23.1, 23.2: Flachseite
- 24: Stahllitze
- 25: Textillage
- 26: Leitlineal

## Patentansprüche

1. Aufspulmaschine zum Aufwickeln mehrerer Fäden zu Spulen mit mehreren längs einer angetriebenen Spulspindel (2) verteilt angeordnete Wickelstellen (5.1, 5.2, 5.3, 5.4) und mit einer Changiervorrichtung (7), die mehreren den Wickelstellen (5.1 - 5.4) zugeordnete Flügelchangiereinheiten (6.1 - 6.4) und einen Elektromotor (10) aufweist, wobei der Elektromotor (10) und die Flügelchangiereinheiten (6.1, 6.4) über einen Riementrieb (9) mit einen endlosen Zahnriemen (12) mit einer Vielzahl von Riemenzähnen (22) miteinander verbunden sind,
**dadurch gekennzeichnet, dass**
der Zahnriemen einen Teilungsabstand (T) zwischen zwei benachbarten Riemenzähnen (22) von > 4 mm bis < 5mm aufweist.

2. Aufspulmaschine nach Anspruch 1,
**dadurch gekennzeichnet, dass**
der Teilungsabstand (T) zwischen zwei benachbarten Riemenzähnen (22) 4,82 mm groß ist.

3. Aufspulmaschine nach Anspruch 1 oder 2,
**dadurch gekennzeichnet, dass**
die Riemenzähne (22) jeweils eine Parabelform mit vollständig ausgefüllten Zahnköpfen aufweisen.

4. Aufspulmaschine nach einem der Ansprüche 1 bis 3,
**dadurch gekennzeichnet, dass**
der Riementrieb (9) mehrere Zahnscheiben (11.1 - 11.7) mit einem kreisförmigen Zahnprofil der Scheibenzähne aufweist.

5. Aufspulmaschine nach einem der Ansprüche 1 bis 4,
**dadurch gekennzeichnet, dass**
zumindest eine Flachseite (23.1) des Zahnriemens (12) eine dämpfende Textillage (25) trägt, wobei der Grundwerkstoff des Zahnriemens (12) aus einem Polyurethan gebildet ist und wobei in dem Grundwerkstoff mehrere Stahllitzen (24) eingebettet sind.

6. Aufspulmaschine nach einem der vorgenannten Ansprüche,
**dadurch gekennzeichnet, dass**
der Zahnriemen (12) an einer gegenüberliegende Flachseite (23.2) eine gegenüberliegende Vielzahl von Riemenzähnen (22) aufweist und dass die sich an den Flachseiten (23.1, 23.2) gegenüberliegenden Riemenzähne (22) versetzt zueinander an dem Zahnriemen (12) ausgebildet sind.

7. Aufspulmaschine nach Anspruch 6,
**dadurch gekennzeichnet, dass**
die Riemenzähne (22) an beiden Flachseiten (23.1, 23.2) des Zahnriemens (12) gleich große Teilungsabstände (T) aufweisen und dass der Versatz (V) zwischen den gegenüberliegenden Riemenzähnen (22) gleich dem halbem Teilungsabstand (T) ist.

8. Zahnriemen zur Verwendung in einer Aufspulmaschine nach einem der Ansprüche 1 bis 7, mit einer Vielzahl von Riemenzähnen (22) an zwei gegenüberliegenden Flachseiten (23.1, 23.2),
**dadurch gekennzeichnet, dass**
der Teilungsabstand (T) zwischen benachbarten Riemenzähnen (22) einer der Flachseiten (23.1, 23.2) einen Wert von 4,82 mm hat.

9. Zahnriemen nach Anspruch 8,
**dadurch gekennzeichnet, dass**
der Teilungsabstand (T) der Riemenzähne (22) an beiden Flachseiten (22.1, 22.2) identisch ist.

10. Zahnriemen nach Anspruch 8 oder 9,
**dadurch gekennzeichnet, dass**
die sich an den Flachseiten (23.1, 23.2) gegenüberliegenden Riemenzähne (22) versetzt zueinander an dem Zahnriemen (12) ausgebildet sind und dass der Versatz (V) gleich dem halben Teilungsabstand (T) ist.

## Claims

1. A winding machine for winding up a plurality of threads to form bobbins, having a plurality of winding stations (5.1, 5.2, 5.3, 5.4) arranged in a manner distributed along a driven bobbin-winding spindle (2), and having a traversing device (7) which has a plurality of flyer traversing units (6.1-6.4) assigned to the winding stations (5.1-5.4) and an electric motor (10), wherein the electric motor (10) and the flyer traversing units (6.1, 6.4) are connected together via a belt drive (9), the belt drive (9) has an endless toothed belt (12) having a multiplicity of belt teeth (22)
**characterized in that**
the belt has a pitch spacing (T) between two adjacent belt teeth (22) in the range of > 4 mm to < 5 mm.

2. The winding machine as claimed in claim 1,
**characterized in that**
the pitch spacing (T) between two adjacent belt teeth (22) has a magnitude of 4.82 mm.

3. The winding machine as claimed in claim 1 or 2,
**characterized in that**
the belt teeth (22) each have a parabolic shape with completely filled tooth tips.

4. The winding machine as claimed in one of claims 1 to 3,
**characterized in that**
the belt drive (9) has a plurality of toothed disks (11.1-11.7) having a circular profile of the disk teeth.

5. The winding machine as claimed in one of claims 1 to 4,
**characterized in that**
at least one flat side (23.1) of the toothed belt (12) carries a damping textile ply (25), wherein the basic material of the toothed belt (12) is formed from a polyurethane and wherein a plurality of steel cords (24) are embedded in the basic material.

6. The winding machine as claimed in one of the preceding claims,
**characterized in that**
the toothed belt (12) has an opposing multiplicity of belt teeth (22) on an opposing flat side (23.2), and **in that** the opposing belt teeth (22) on the flat sides (23.1, 23.2) are formed on the toothed belt (12) in an offset manner with respect to one another.

7. The winding machine as claimed in claim 6,
**characterized in that**
the belt teeth (22) on the two flat sides (23.1, 23.2) of the toothed belt (12) have identical pitch spacings (T), and **in that** the offset (V) between the opposing belt teeth (22) is equal to half the pitch spacing (T).

8. A toothed belt for use in a winding machine as claimed in one of claims 1 to 7, having a multiplicity of belt teeth (22) on two opposing flat sides (23.1, 23.2),
**characterized in that**
the pitch spacing (T) between adjacent belt teeth (22) on one of the flat sides (23.1, 23.2) has a value of 4.82 mm.

9. The toothed belt as claimed in claim 8,
**characterized in that**
the pitch spacing (T) of the belt teeth (22) is identical on both flat sides (23.1, 23.2).

10. The toothed belt as claimed in claim 8 or 9,
**characterized in that**
the opposing belt teeth (22) on the flat sides (23.1, 23.2) are formed on the toothed belt (12) in an offset manner with respect to one another, and **in that** the offset (V) is equal to half the pitch spacing (T).

## Revendications

1. Enrouleuse pour enrouler plusieurs fils en bobines, comprenant plusieurs zones de bobinage (5.1, 5.2, 5.3, 5.4) réparties le long d'une broche de bobine entraînée (2) et comprenant un dispositif de déplacement (7) qui présente plusieurs unités de déplacement d'ailes (6.1-6.4) associées aux zones de bobinage (5.1-5.4) et un moteur électrique (10), le moteur électrique (10) et les unités de déplacement d'ailes (6.1, 6.4) étant connectés mutuellement par un entraînement à courroie (9) avec une courroie dentée sans fin (12) présentant une pluralité de dents de courroie (22),
**caractérisée en ce que**
la courroie dentée présente une distance de séparation (T) entre deux dents de courroie adjacentes (22) de > 4 mm à < 5 mm.

2. Enrouleuse selon la revendication 1,
**caractérisée en ce que**
la distance de séparation (T) entre deux dents de courroie adjacentes (22) est de 4,82 mm.

3. Enrouleuse selon la revendication 1 ou 2,
**caractérisée en ce que**
les dents de courroie (22) présentent chacune une forme parabolique avec des têtes de dents entièrement remplies.

4. Enrouleuse selon l'une quelconque des revendications 1 à 3,
**caractérisée en ce que**
l'entraînement à courroie (9) présente plusieurs disques dentés (11.1-11.7) avec un profil de dent circulaire des dents de disque.

5. Enrouleuse selon l'une quelconque des revendications 1 à 4,
**caractérisée en ce**
**qu'**au moins un côté plat (23.1) de la courroie dentée (12) porte une couche textile amortissante (25), le matériau de base de la courroie dentée (12) étant formé de polyuréthane et plusieurs fils d'acier (24) étant noyés dans le matériau de base.

6. Enrouleuse selon l'une quelconque des revendications précédentes,
**caractérisée en ce que**
la courroie dentée (12) présente, au niveau d'un côté plat opposé (23.2), une pluralité opposée de dents de courroie (22) et **en ce que** les dents de courroie opposées (22) sur les côtés plats (23.1, 23.2) sont réalisées de manière décalée les unes par rapport aux autres sur la courroie dentée (12).

7. Enrouleuse selon la revendication 6,
**caractérisée en ce que**
les dents de courroie (22) sur les deux côtés plats (23.1, 23.2) de la courroie dentée (12) présentent des distances de séparation (T) identiques et **en ce que** le décalage (V) entre les dents de courroie opposées (22) est égal à la moitié de la distance de séparation (T).

8. Courroie dentée pour l'utilisation dans une enrouleuse selon l'une quelconque des revendications 1 à 7, comprenant une pluralité de dents de courroie (22) au niveau de deux côtés plats opposés (23.1, 23.2),
**caractérisée en ce que**
la distance de séparation (T) entre les dents de courroie adjacentes (22) de l'un des côtés plats (23.1, 23.2) présente une valeur de 4,82 mm.

9. Courroie dentée selon la revendication 8,
**caractérisée en ce que**
la distance de séparation (T) des dents de courroie (22) au niveau des deux côtés plats (23.1, 23.2) est identique.

10. Courroie dentée selon la revendication 8 ou 9,
**caractérisée en ce que**
les dents de courroie (22) opposées au niveau des côtés plats (23.1, 23.2) sont réalisées de manière décalée les unes par rapport aux autres au niveau de la courroie dentée (12) et **en ce que** le décalage (V) est égal à la moitié de la distance de séparation (T).
